# EUROPÄISCHE PATENTSCHRIFT

(11) **EP 3 327 203 B1**
(45) Veröffentlichungstag und Bekanntmachung des Hinweises auf die Patenterteilung: **25.08.2021**
(21) Anmeldenummer: 17201491.2
(22) Anmeldetag: 14.11.2017
(51) Int. Cl.: E02F 5/10, H02G 1/06

(54) **VERLEGEVORRICHTUNG ZUR ERDVERLEGUNG FLEXIBLER STRANGMATERIALIEN**
RELOCATION DEVICE FOR LAYING FLEXIBLE STRAND MATERIAL IN THE GROUND
DISPOSITIF DE POSE PERMETTANT LA POSE EN TERRE DE MATÉRIAUX EN FILS FLEXIBLES

(30) Priorität: 28.11.2016 DE 202016106630 U
(43) Veröffentlichungstag der Anmeldung: 30.05.2018
(73) Patentinhaber: Föckersperger, Walter, 84189 Pauluszell/Ndb. (DE)
(72) Erfinder: Föckersperger, Walter, 84189 Pauluszell/Ndb. (DE)
(74) Vertreter: Winter, Brandl - Partnerschaft mbB

(56) Entgegenhaltungen:
- DE-A1- 2 529 285
- FR-A5- 2 087 484
- FR-A5- 2 102 575
- US-A- 3 699 693
- US-A- 3 849 999

## Beschreibung

Die Erfindung betrifft eine Verlegevorrichtung zur Erdverlegung flexibler Strangmaterialien, z.B. von Stromkabeln, Blitzschutzkabeln, Warnbändern, Abdeckbändern, Rohren oder dergleichen.

Im Stand der Technik oder in der Literatur wird eine solche Verlegevorrichtung auch als Kabelverlegepflug, Verlegepflug, Kabelpflug, Anordnung zum Einführen eines Rohres oder Kabels in den Erdboden mittels eines pflugartigen Geräts, oder dergleichen bezeichnet.

Beispielsweise ist in der DE 101 15 456 B4 ein Verlegepflug zum Verlegen eines elastischen, strangförmigen Materials in einer bestimmten Tiefe im Erdreich gezeigt. Der in der DE 101 15 456 B4 gezeigte Verlegepflug weist ein in das Erdreich eingreifendes Schwert zur Ausbildung eines Verlegeschlitzes für das strangförmige Material, eine vom Schwert geschleppte Verdrängervorrichtung zum seitlichen Verdrängen des den Verlegeschlitz definierenden Erdreichs und eine von der Verdrängervorrichtung geschleppte Materialeinführung auf, über die mehrere Strangmaterialien in den Verlegeschlitz verlegt werden können. Die Materialeinführung ist als ein Hohlgehäuse ausgebildet, das die zu verlegenden Strangmaterialien in voneinander getrennten, bogenförmig verlaufenden Führungsschächten jeweils von einer am Kopfende der Materialeinführung liegenden Eintrittsöffnung zu einer am Fußende der Materialeinführung liegenden Austrittsöffnung führt. Die Führungsschächte verlaufen von den Eintrittsöffnungen bis zu den Austrittsöffnungen parallel nebeneinander. In Schlepprichtung gesehen, liegen die Eintrittsöffnungen daher hintereinander, während die Austrittsöffnungen vertikal übereinander liegen. Mehrere Strangmaterialien werden daher unmittelbar vertikal übereinander in den Verlegeschlitz eingeführt und abgelegt.

Oftmals muss bzw. müssen, z.B. aufgrund gesetzlicher Vorgaben, bei der Verlegung eines ersten Strangmaterials oder mehrerer erster Strangmaterialien im Erdreich, z.B. in der Form von Kabeln, Rohren oder dergleichen, ein zweites Strangmaterial oder mehrere zweite Strangmaterialien, z.B. in der Form von Warnbändern, Blitzschutzkabeln, Abdeckplatten oder dergleichen, in einem vorgegebenen vertikalen Mindestabstand im Wesentlichen unmittelbar oberhalb des ersten Strangmaterials oder der mehreren ersten Strangmaterialien verlegt werden.

Ein Kabelpflug, der sich mit einer Lösung der oben beschriebenen Thematik beschäftigt, ist in der DE 33 26 531 A1 gezeigt. Der Kabelpflug weist unter anderem ein Schwert zur Erzeugung eines Schlitzes in einem Erdreich und einen dem Schwert nachlaufenden, geschleppten Verlegeschacht zum Einbringen und Ablegen eines Kabels oder dergleichen auf. Im Unterschied zum Verlegepflug der DE 101 15 456 B4 ist es mit dem Kabelpflug der DE 33 26 531 A1 möglich, mittels einer rohrförmigen Bandführung ein Warnband oder dergleichen in einem vertikalen Abstand oberhalb des einzubringenden ersten strangförmigen Materials abzulegen. Die rohrförmige Bandführung ist dabei zwischen dem Schwert und dem Verlegeschacht angeordnet, wobei eine Austrittsöffnung der Bandführung, in Schlepprichtung des Kabelpflugs betrachtet, seitlich oberhalb vor einer Austrittsöffnung des Verlegeschachts angeordnet ist.

Ein dem Kabelpflug aus der DE 33 26 531 A1 ähnlicher Kabelpflug ist in der DE 42 10 858 A1 gezeigt. Allerdings ist bei dem Kabelpflug der DE 42 10 858 A1 die Einführung eines zweiten strangförmigen Materials nicht vorgesehen.

Ein weiterer Kabelpflug zur Ablage eines Bündels strangförmiger Materialien, insbesondere dreier Einleiterkabeln, ist in der DE 35 04 977 A1 gezeigt. Der Kabelpflug weist ein Schwert zur Erzeugung eines Schlitzes in einem Erdreich und einen dem Schwert nachlaufenden, geschleppten Kabelschacht zum Einbringen und Ablegen des Strangmaterialbündels auf. Des Weiteren ist eine Vorrichtung zur Verlegung eines Warnbandes, Blitzschutzkabels oder dergleichen lösbar mit dem Kabelschacht verbunden. Bei dem Kabelpflug der DE 35 04 977 A1 ist eine Austrittsöffnung der Vorrichtung zur Verlegung des Warnbandes, Blitzschutzkabels oder dergleichen, in Schlepprichtung des Kabelpflugs betrachtet, hinter einer Austrittsöffnung des Kabelschachts angeordnet.

In der DE 199 28 682 C2 ist eine Anordnung zum Einführen eines Rohres oder Kabels in einen Erdboden mittels eines pflugartigen Geräts gezeigt. Die Anordnung weist ein in den Erdboden eindringendes Schwert zur Bildung einer Erdrinne auf, wobei das Schwert einen Verdränger zieht, der mit einem Aufweitelement einen Erdkanal für das einzuziehende Rohr oder Kabel bildet. Im Unterschied zu den oben beschriebenen Verlege- und Kabelpflügen ist bei der Anordnung der DE 199 28 682 C2 das einzuziehende Rohr oder Kabel, in Schlepprichtung betrachtet, hinter dem Verdränger bzw. Aufweitelement befestigt und wird ausschließlich nachgezogen. Des Weiteren weist die Anordnung der DE 199 28 682 C2 eine, in Schlepprichtung betrachtet, hinter dem Verdränger und oberhalb des Aufweitelements angeordnete Sandzuführung zum Einbringen von Sand oder sandähnlichem Gestein in den Erdkanal auf. Der eingebrachte Sand umgibt das nachzuziehende Rohr so, dass es geschützt im Erdkanal positioniert ist. Wie bei den Kabelpflügen der DE 33 26 531 A1 oder der DE 35 04 977 A1 kann die Anordnung oberhalb des Rohrs oder Kabels eine erste und/oder eine zweite Rohrzuführung zum Einführen von Zusatzeinrichtungen, z.B. Trassenbänder, Steuerkabel oder Belüftungsrohre, für das nachzuziehende Rohr oder Kabel aufweisen.

Die oben beschriebenen Verlegevorrichtungen haben die folgenden Nachteile. Der Verlegepflug der DE 101 15 456 B4 verfügt grundsätzlich nicht über die Möglichkeit, mehrere Strangmaterialien unter Einhaltung vorgegebener vertikaler Mindestabstände zu verlegen. Der Kabelpflug der DE 33 26 531 A1 kann ein Warnband oder dergleichen als ein zweites Strangmaterial aufgrund der Anordnung der Bandführung zwischen dem Schwert und dem Verlegeschacht nur seitlich versetzt oberhalb eines Kabels oder dergleichen als ein erstes Strangmaterial ablegen. Bei dem Kabelpflug der DE 35 04 977 A1 besteht die Gefahr, dass das einzuführende Warnband oder dergleichen als ein zweites Strangmaterial in den vom Schwert erzeugten und dem Kabelschacht freigehaltenen Verlegeschlitz fällt und somit ein vorgegebener vertikaler Mindestabstand der Strangmaterialien nicht gewährleistet werden kann. Der Kabelpflug der DE 199 28 682 C2 weist eine separate Sandzuführung auf, die Sand oder sandähnliches Gestein zwischen ein Rohr oder Kabel als ein erstes Strangmaterial und ein Trassenband oder dergleichen als ein zweites Strangmaterial einbringt. Die Sandzuführung an sich erhöht die Komplexität des Kabelpflugs. Des Weiteren stellt die Notwendigkeit, im laufenden Betrieb des Kabelpflugs Sand oder sandähnliches Gestein in der Sandzuführung mitführen zu müssen, einen zusätzlichen Aufwand dar.

Das Dokument DE 25 29 285 A1 zeigt ein Schwert zur Erdverlegung flexibler Strangmaterialien mit mehreren gelenkig verbundenen Teilstücken. In einen von einem vorderen Teilstück erzeugten Schlitz kann ein Kabel verlegt werden. Das Kabel wird in einem am hinteren Ende des Schwerts angeordneten Teilstück geführt. Mit dem hinteren Teilstück ist ein Führungskanal verbunden, der der Zuführung eines Warnbands dient, das in vertikalem Abstand oberhalb des Kabels verlegt werden kann. Der Führungskanal ist mittels einer Lochreihe höhenverstellbar, um den Abstand zwischen dem Kabel und dem Warnband einstellen zu können. Eine Vorrichtung zur Erzeugung einer Erdbrücke, die verhindern soll, dass Steine in den erzeugten Schlitz fallen und eine Auflage für das Warnband bilden sollen, ist kreuzgelenkartig am hinteren Ende des hinteren Teilstücks angeordnet.

Die Erfindung hat daher ausgehend vom Dokument DE 25 29 285 A1 die Aufgabe, eine zwei Einführungen aufweisende Verlegevorrichtung durch eine technisch einfache Konstruktion so weiterzubilden, dass ein erstes flexibles Strangmaterial und ein zweites flexibles Strangmaterial unter Einhaltung eines vorgegebenen vertikalen Mindestabstands im Erdreich verlegt werden können.

Diese Aufgabe wird durch eine Verlegevorichtung mit den Merkmalen des unabhängigen Anspruchs 1 gelöst. Vorteilhafte Weiterbildungen sind Gegenstand abhängiger Ansprüche.

Die erfindungsgemäße Verlegevorrichtung weist eine sich in einer Vertikalrichtung der Verlegevorrichtung erstreckende Verlegeschlitzausbildungseinrichtung zum Ausbilden eines Verlegeschlitzes im Erdreich, eine in Längsrichtung der Verlegevorrichtung der Verlegeschlitzausbildungseinrichtung nachlaufende, geschleppte erste Einführung zum Einführen zumindest eines flexiblen ersten Strangmaterials in den Verlegeschlitz, und eine der ersten Einführung nachlaufende, geschleppte zweite Einführung zum Einführen zumindest eines flexiblen zweiten Strangmaterials in den Verlegeschlitz in einem vertikalen Mindestabstand oberhalb des ersten Strangmaterials auf. Um einen vorgegebenen vertikalen Mindestabstand zwischen dem zumindest einen ersten Strangmaterial und dem zumindest einen zweiten Strangmaterial zu gewährleisten, soll zwischen der ersten Einführung und der zweiten Einführung ein Verdränger mit einer Verdrängerfläche zum Verdrängen von Erde aus dem an den Verlegeschlitz seitlich angrenzenden Erdreich auf das zumindest eine erste Strangmaterial angeordnet sein. Erfindungsgemäß ist der Verdränger mit der zweiten Einführung relativ zur ersten Einführung auf- und abwärts, d.h. um eine horizontale Schwenkachse der Verlegevorrichtung, schwenkverstellbar, insbesondere stufenlos schwenkverstellbar. Durch die Schwenkverstellung des Verdrängers mit der zweiten Einführung lässt sich die Schwenklage des Verdrängers und der zweiten Einführung relativ zur ersten Einführung bestimmen. Dadurch lässt sich einerseits die Schräglage der Verdrängerfläche einstellen oder korrigieren, um eine ausreichende Verdrängung von Erde zu erhalten. Weil die zweite Einführung mit dem Verdränger schwenkverstellbar ist, lässt sich andererseits durch die Schwenkverstellung der vertikale Abstand der Austrittsöffnung der zweiten Einführung relativ zur Austrittsöffnung der ersten Einführung einstellen.

Richtungsangaben wie die vorgenannte "Höhen- oder Vertikalrichtung" oder im Folgenden verwendete Bezeichnungen "vertikal", "horizontal", "auf- und abwärts", "seitlich" oder dergleichen beziehen sich auf einen Zustand, in dem sich die Verlegevorrichtung in ihrer Arbeitsstellung im Erdreich befindet. In der Arbeitsstellung deckt sich die "Vertikalrichtung" oder "Höhenrichtung" der Verlegevorrichtung daher mit der Vertikalen auf die Erdoberfläche bzw. mit der Lotrichtung. Die "Längsrichtung" der Verlegevorrichtung stimmt mit der Schlepprichtung der Verlegevorrichtung überein.

Um einen vorgegebenen vertikalen Mindestabstand einzuhalten, wäre es denkbar, den vertikalen Zwischenraum zwischen dem zumindest einen ersten Strangmaterial und dem zumindest einen zweiten Strangmaterial mit in den Verlegeschlitz eingebrachtem Fremdmaterial, beispielsweise Sand oder Kies, aufzufüllen, wie beispielsweise in der DE 199 28 682 C2 vorgeschlagen. Dies hätte einen zusätzlichen vorrichtungstechnischen Aufwand zur Notwendigkeit. Beispielsweise müsste eine Sand- bzw. Kieszufuhreinrichtung an der Verlegevorrichtung angeordnet und mitgetragen werden. Um dadurch bedingte konstruktive Schwierigkeiten zu vermeiden, geht die Erfindung einen anderen Weg. Erfindungsgemäß soll nun Erde aus dem an den Verlegeschlitz seitlich angrenzenden Erdreich heraus auf das zumindest ein erstes Strangmaterial verdrängt werden. Auf der auf dem zumindest einen ersten Strangmaterial ruhenden Erde kann dann das zumindest eine zweite Strangmaterial abgelegt werden kann. Durch die Verdrängung ergibt sich automatisch auch eine Verdichtung der verdrängten Erde, wodurch auch eine allzu starkes Setzen und Absinken der verdrängten Erde in Grenzen gehalten und schließlich der vorgegebene vertikale Mindestabstand eingehalten werden kann. Zusätzliche Einrichtungen, um Fremdmaterial, wie Sand oder Kies, in den Verlegeschlitz einzuführen, sind daher nicht notwendig.

Die Verdrängerfläche hat, wie oben bereits beschrieben, die Funktion, Erde, die aus dem an den Verlegeschlitz seitlich angrenzenden Erdreich, in Schlepprichtung betrachtet, vor der zweiten Einführung unter die Verdrängerfläche gerät, in den Bereich zwischen das zumindest eine erste Strangmaterial und das zumindest eine zweite Strangmaterial zu verdrängen und zu verdichten, um durch die nach unten verdrängte Erde einen Abstand zwischen dem ersten Strangmaterial und dem zweiten Strangmaterial zu erhalten. Durch eine entsprechende Auslegung und Gestaltung der Verdrängerfläche lässt sich ein vorgegebener vertikaler Mindestabstand erreichen. Die Verdrängerfläche kann nach dem Vorbild von gängigen Verdrängern, z.B. Skiern, Verdrängerbooten oder dergleichen, gestaltet sein und kann eine ebene, abgewinkelte oder gekrümmte Form haben.

In einer derzeit bevorzugten Ausführung ist die Verdrängerfläche oberhalb einer Austrittsöffnung der ersten Einführung angeordnet, aus der ein erstes Strangmaterial austritt, und in Schlepprichtung hinter der ersten Austrittsöffnung zumindest abschnittsweise nach hinten unten geneigt. Die Verdrängerfläche kann im Bereich hinter der ersten Austrittsöffnung beispielsweise abschnittsweise schräg nach hinten unten geneigt, nach hinten unten abgewinkelt, nach hinten unten gekrümmt oder nach hinten unten gebogen sein. Die Neigung nach hinten unten kann, in Schlepprichtung gesehen, auf Höhe der Austrittsöffnung der ersten Einführung, in einem festgelegten Abstand vor der Austrittsöffnung oder in einem festgelegten Abstand hinter der Austrittsöffnung beginnen. "Zumindest abschnittsweise" heißt, dass die Verdrängerfläche im Bereich hinter der ersten Austrittsöffnung über ihre ganze Länge oder nur einen Teil ihrer Länge nach hinten unten geneigt ist. Entscheidend ist lediglich, dass die Verdrängerfläche, in Schlepprichtung gesehen, im Bereich hinter der ersten Austrittsöffnung in der Weise nach hinten unten geneigt ist, dass sie durch ihre Neigung nach hinten unten Erde nach unten verdrängt und verdichtet.

Unabhängig davon ragt die Verdrängerfläche, in Schlepprichtung projiziert horizontal seitlich über die Verlegeschlitzausbildungseinrichtung hinaus, wodurch sichergestellt wird, dass die Verdrängerfläche nicht völlig innerhalb der Breite des Verlegeschlitzes läuft, sondern in das an den Verlegeschlitz seitlich angrenzende Erdreich eindringt.

Die Neigung, Krümmung oder Biegung der Verdrängerfläche nach hinten unten, d.h. in Richtung einer Sohle des Verlegeschlitzes, auf der das zumindest eine erste Strangmaterial abgelegt wird, sorgt dabei dafür, dass das zwischen das zumindest eine erste Strangmaterial und das zumindest eine zweite Strangmaterial verdrängte Erdreich zusammengepresst und verdichtet wird, so dass der vorgegebene vertikale Mindestabstand nicht durch ein andernfalls möglicherweise auftretendes Setzen und Absinken der den Verlegeschlitzbereich zwischen dem ersten und zweiten Strangmaterial füllenden Erde gefährdet wird.

Insbesondere dann, wenn durch die erste Einführung mehrere, beispielsweise drei, erste Strangmaterialien beispielsweise horizontal nebeneinander auf der Sohle des Verlegeschlitzes verlegt werden sollen, ist es von Vorteil, wenn eine maximale Breite der Verdrängerfläche im Wesentlichen einer maximalen Breite der ersten Einführung entspricht oder größer ist als die maximale Breite der ersten Einführung. Dadurch lässt sich sicherstellen, dass sowohl das oder die mittig liegenden Strangmaterialien als auch die horizontal außenliegenden Strangmaterialien von verdrängter Erde überdeckt sind und über jedem ersten Strangmaterial in einem vorgegebenen vertikalen Mindestabstand ein zweites Strangmaterial abgelegt werden kann.

Der zwischen der ersten Einführung und der zweiten Einführung angeordnete Verdränger kann ein von der zweiten Einführung unabhängiges Element, z.B. ein plattenförmiges Element (Verdrängerplatte) sein, das die zweite Einführung (mittelbar oder unmittelbar) in Schlepprichtung mitnimmt und schleppt. Diese Gestaltung bietet den Vorteil, dass sich die einzelnen Komponenten, d.h. der Verdränger und die zweite Einführung, voneinander unabhängig beispielsweise in Abhängigkeit von der Beschaffenheit des Erdreichs und/oder der Art des zumindest einen zweiten Strangmaterials flexibel austauschen und kombinieren lassen.

In einer derzeit bevorzugten Ausführungsform ist der Verdränger aber mit der zweiten Einführung zu einer einstückig handhabbaren Hohlgehäusekonstruktionseinheit verbunden. Die zweite Einführung "sitzt" beispielsweise auf dem plattenförmigen Verdränger. Bei dieser Ausführungsform hat die Einheit aus Verdränger und zweiter Einführung zwei Funktionen: erstens, das zumindest eine zweite Strangmaterial in den Verlegeschlitz einzuführen; und zweitens, Erde nach unten auf das bereits verlegte zumindest eine erste Strangmaterial zu verdrängen und zu verdichten. Diese Gestaltung hat den Vorteil von Kompaktheit und reduziert die Zahl der Komponenten der Verlegevorrichtung.

Bei der zweiten Einführung der Verlegevorrichtung kann die Austrittsöffnung, aus der das zweite Strangmaterial austritt, in Schlepprichtung hinter der Austrittsöffnung der ersten Einführung liegen. Wenn die Austrittsöffnung der zweiten Einführung in Schlepprichtung hinter der Austrittsöffnung der ersten Einführung liegt, kann sichergestellt werden, dass das aus der Austrittsöffnung der zweiten Einführung austretende zweite Strangmaterial auf der durch die Verdrängerfläche nach unten verdrängten und verdichteten Erde abgelegt wird.

Die Verdrängerfläche kann an ihrem in Schlepprichtung vorderen Abschnitt nach vorne oben geneigt sein. Der vordere Abschnitt der Verdrängerfläche kann beispielsweise schräg nach vorne oben abgewinkelt, nach vorne oben gekrümmt oder nach vorne oben gebogen sein. Der vordere Abschnitt kann im Besonderen kufenförmig nach vorne oben gebogen sein. Durch die Neigung nach vorne oben des vorderen Abschnitts wird - wie bei einem Ski oder einem Verdrängerboot - ungeachtet der weiteren Gestaltung der Verdrängerfläche im Anschluss an den vorderen Abschnitt, z.B. einer in sich ebenen Fläche oder einer abgewinkelten Fläche, eine Verdrängung von Erde nach unten gewährleistet.

Ein Stellmechanismus zur Schwenkverstellung kann dabei unmittelbar oder mittelbar zwischen der ersten Einführung und dem Verdränger bzw. der zweiten Einführung vorgesehen sein. Beispielsweise kann ein Stellmechanismus zwischen einem von der ersten Einführung getragenen Einführungsaufsatz und dem Verdränger bzw. der zweiten Einführung vorgesehen sein.

Die oben erwähnte Schwenkverstellung durch einen Stellmechanismus ist nicht zwingend notwendig. Durch eine entsprechende Anpassung der Breite der Projektionsfläche der zweiten Einführung in Schlepprichtung (Verbreiterung oder Verkleinerung) in einem Bereich oberhalb der horizontalen Schwenkachse der zweiten Einführung, beispielsweise eines später angegebenen oberhalb der Schwenkachse liegenden Führungsschachts der zweiten Einführung, kann beim Schleppen durch das Erdreich die zweite Einführung einen Schleppwiderstand erfahren, durch den die zweite Einführung einem Drehmoment um die horizontale Schwenkachse erfährt, das dem Drehmoment entgegengerichtet ist, das die zweite Einführung durch die Erdverdrängung der Verdrängerfläche erfährt. Im Ergebnis kann also auch ohne den oben erwähnten Stellmechanismus allein durch eine entsprechende Anpassung der Breite der Projektionsfläche der zweiten Einführung in Schlepprichtung (Verbreiterung oder Verkleinerung) ein Drehmomentgleichgewicht erreicht werden, durch das die Austrittsöffnung der zweiten Einführung beim Schleppen auf dem vorgegebenen Mindestabstand zur Austrittsöffnung der ersten Einführung gehalten wird. Die zweite Einrichtung kann also hinsichtlich des vorgegebenen Mindestabstands relativ zur ersten Einführung selbsteinstellen ausgebildet sein.

Des Weiteren kann der Verdränger mit der zweiten Einführung, relativ zur ersten Einführung seitlich, d.h. um eine im Wesentlichen vertikale Achse der Verlegevorrichtung, schwenkbar sein. Die dadurch erhaltene Schwenkbarkeit kann dann von Vorteil sein, wenn die Austrittsöffnung der zweiten Einführung in Schlepprichtung in einem großen Abstand zur Austrittsöffnung der ersten Einführung liegt, um beispielsweise bei einer Kurvenfahrt der Verlegevorrichtung ein allzu starkes seitliches Ausscheren der zweiten Einführung zu vermeiden.

Der Verdränger kann mit der zweiten Einführung eine Hohlgehäusekonstruktionseinheit bilden, die zumindest einen zwischen einer Eintrittsöffnung und der Austrittsförmig bogenförmig verlaufenden Führungsschacht zur Führung zumindest eines zweiten Strangmaterials aufweist. In diesem Fall bildet die Unterseite der Hohlgehäusekonstruktionseinheit eine erfindungsgemäße Verdrängerfläche.

Im Besonderen kann die Hohlgehäusekonstruktionseinheit einen Führungsschacht mit einer Eintrittsöffnung und mehreren, beispielsweise drei, voneinander getrennten Austrittsöffnungen aufweisen, die horizontal oder seitlich nebeneinander angeordnet sind. Für den Fall, dass mehrere zweite, beispielsweise die vorhin erwähnten drei, Strangmaterialien verlegt werden, können diese somit, in Schlepprichtung betrachtet, hintereinander in die eine Eintrittsöffnung eintreten und horizontal beabstandet aus den voneinander getrennten Austrittsöffnungen der Hohlgehäusekonstruktionseinheit austreten.

Des Weiteren kann die erste Einführung ein Hohlgehäuse aufweisen, das zumindest einen zwischen einer Eintrittsöffnung und der Austrittsöffnung bogenförmig verlaufenden Führungsschacht zur Führung eines ersten Strangmaterials bildet. Das Hohlgehäuse kann z.B. eine Schweißkonstruktion sein. Die Bogenform des Führungsschachts kann so gewählt werden, dass ein minimal zulässiger Biegeradius des ersten Strangmaterials nicht unterschritten wird.

Der seitliche Umriss des Hohlgehäuses der ersten Einführung kann, in Schlepprichtung gesehen, grundsätzlich eine beliebige Form haben, beispielsweise I-förmig ausgebildet sein. In einer bevorzugten Ausführungsform ist der seitliche Umriss des Hohlgehäuses der ersten Einführung im Wesentlichen umgekehrt T-förmig. In diesem Fall lässt sich das Hohlgehäuse in einen sich in Vertikalrichtung der Verlegevorrichtung erstreckenden mittigen Rumpf und am Fußende beidseits des Rumpfs seitlich auskragende Flossen unterteilen.

Diese Konstruktion bietet sich dazu an, im Hohlgehäuse der ersten Einführung mehrere Führungsschächte, beispielsweise drei, auszubilden, die voneinander getrennt so verlaufen, dass die Eintrittsöffnungen in Schlepprichtung hintereinander und die Austrittsöffnungen horizontal oder seitlich nebeneinander angeordnet sind. Dadurch können mehrere erste Strangmaterialien, beispielsweise drei, in Schlepprichtung der Verlegevorrichtung hintereinander in die erste Einführung eintreten und horizontal beabstandet aus der ersten Einführung austreten und auf der durch die umgekehrte T-Form der ersten Einführung horizontal verbreiterte Sohle des Verlegeschlitzes abgelegt werden.

Das Hohlgehäuse der ersten Einführung kann hierzu des Weiteren beidseitig des Hohlgehäuses, vorteilhaft in Schlepprichtung vor den Flossen, ein Schaufelelement mit einer schräg nach vorne unten geneigten Schaufelfläche aufweisen. Die in Schlepprichtung vorderen Enden der Schaufelelemente können dabei im Wesentlichen auf gleicher Höhe wie eine Fußsohle der Verschlegeschlitzausbildungseinrichtung liegen. Die Schaufelelemente erleichtern die oben erwähnte horizontale Verbreiterung des Verlegeschlitzes. Des Weiteren kann die schräg nach vorne unten geneigte Form der Schaufelflächen dafür sorgen, dass die Schaufelelemente Erde nach oben verdrängen und dadurch eine Kraftkomponente in Vertikalrichtung von oben nach unten auf die erste Einführung wirkt. Einerseits wird dadurch erreicht, dass die erste Einführung gegen die Verlegeschlitzsohle gedrückt wird und nicht durch Steine oder dergleichen im Erdreich nach oben wandert. Andererseits kann dadurch erreicht werden, dass die aus den Austrittsöffnungen der ersten Einführung austretenden ersten Strangmaterialien sicher auf der Verlegeschlitzsohle abgelegt werden.

Die Verschlegeschlitzausbildungseinrichtung kann, wie es beispielsweise aus der DE 101 15 456 B4 bekannt ist, zumindest ein sich in Vertikalrichtung der Verlegevorrichtung erstreckendes Schwert aufweisen.

Im Hinblick auf die bevorzugte Anwendung der erfindungsgemäßen Verlegevorrichtung zur Erdverlegung von einen relativ großen Durchmesser aufweisenden Strangmaterialien und die dadurch bedingten große Länge der Verlegevorrichtung von bis zu ca. 10 m ist die Verlegevorrichtung vorteilhaft mehrgliedrig bzw. mehrgelenkig ausgeführt. Im Besonderen kann die die erste Einführung relativ zum Schwert seitlich, d.h. um eine im Wesentlichen vertikale Schwenkachse, schwenkbar und/oder relativ zum Schwert auf- und abwärts, d.h. um eine im Wesentlichen horizontale Schwenkachse, schwenkbar ausgebildet sein. Durch diese Gestaltung wird gegenüber einer starren Bauweise die Beweglichkeit der erfindungsgemäßen Verlegevorrichtung erhöht. Diese Beweglichkeit kann dazu beitragen, dass im laufenden Betrieb die erste Einführung der Bewegung des Schwerts gut folgen und sich die Verlegevorrichtung automatisch an Bodenoberflächenkrümmungen anpassen kann, so dass das aus der ersten Einführung austretende Strangmaterial im Wesentlichen unmittelbar auf Höhe der Sohle des Verlegeschlitzes abgelegt werden kann.

Des Weiteren kann die Verschlegeschlitzausbildungseinrichtung, wie es ebenfalls beispielsweise aus der DE 101 15 456 B4 bekannt ist, in Schlepprichtung zwischen dem Schwert und der ersten Einführung ein Verdrängersegment zum Verbreitern des durch das vom Schwert erzeugten Verlegeschlitzes zumindest auf die Breite der nachfolgenden ersten Einführung aufweisen. Zur Erhöhung der Beweglichkeit kann das Verdrängersegment seitlich schwenkbar am Schwert angelenkt sein. In diesem Fall wird die erste Einführung von dem Schwert (über das Verdrängersegment und einen nachfolgend erwähnten Einführungsadapter) mittelbar geschleppt.

Des Weiteren kann die erste Einführung einen in Schlepprichtung vorauslaufenden Einführungsadapter aufweisen, der am Verdrängersegment auf- und abwärts schwenkbar angelenkt ist und an dem die ersten Einführung seitlich schwenkbar angelenkt ist. Durch diese Gestaltung verlängert sich der Abstand zwischen dem Schwert und der ersten Einführung, es wird aber eine erhöhte Beweglichkeit gerade bei einer groß dimensionierten Verlegevorrichtung erreicht.

Der Einführungsadapter kann wie beispielsweise die erste Einführung als Hohlgehäuse, z.B. als Schweißkonstruktion, ausgebildet sein und, in einer Seitenansicht gesehen, teilweise innerhalb des Verdrängersements liegen, d.h. der Einführungsadapter wird vom Verdrängersegment schürzenartig umgriffen. Durch das schürzenartige Umgreifen des Verdrängersegments kann vermieden werden, dass Erdreich, insbesondere Sand oder Kies, zwischen das Verdrängersegment und den Einführungsadapter fällt und sich festsetzt, wodurch die Bewegbarkeit der einzelnen Teile eingeschränkt bzw. verhindert wird. Der Schwenkbereich des Einführungsadapters innerhalb des Verdrängersegments kann von einem Begrenzungselement, z.B. einem Stellzylinder, das zwischen dem Schwert und der ersten Einführung angeordnet ist, begrenzt sein.

Die erste Einführung kann also über das Verdrängersegment vom Schwert mittelbar geschleppt werden.

Analog der Gestaltung der ersten Einführung kann auch der Einführungsadapter aus einem sich in Vertikalrichtung der Verlegevorrichtung erstreckenden Rumpf und am Fußende beidseits des Rumpfs seitlich auskragenden Flossen, in Schlepprichtung gesehen, umgekehrt T-förmig ausgebildet sein.

Des Weiteren kann der Einführungsadapter relativ zum Schwert so angeordnet sein, dass eine Fußsohle des Einführungsadapters auf gleicher Höhe wie eine Fußsohle des Schwerts läuft. Idealerweise laufen die Fußsohlen des Schwerts, des Verdrängersegments, des Einführungsadapters und der ersten Einführung alle auf gleicher Höhe.

Die Verlegevorrichtung kann des Weiteren einen an einem Fuß des Schwertes, vorzugsweise auf- und abwärts schwenkbar angelenkten Schwertschuh aufweisen, etwa nach dem Vorbild der in der DE 101154 56 B4 angegebenen Verlegevorrichtung. Über den aufund abwärts schwenkbaren Schwertschuh kann die Eindringtiefe der Verlegevorrichtung beeinflusst oder korrigiert werden.

Wenn der Schwertschuh einen Rumpf als einen zentralen Abschnitts des Schwerts beidseitig umgreift, kann er wie die Flossen der ersten Einführung dazu herangezogen werden, einen durch den Rumpf des Schwerts erzeugten vertikalen Schlitz umgekehrt T-förmig zu erweitern. Hierzu kann der Schwertschuh, in einer Draufsicht gesehen, analog der ersten Einführung, in Schlepprichtung sich verjüngende Schneiden aufweisen. Der Schwertschuh kann eine Vielzahl von Flossenelementen aufweisen, die, in einer Draufsicht gesehen, in Schlepprichtung gestaffelt angeordnet sind, wobei vorteilhaft jedes Flossenelement eine, in einer Seitenansicht gesehen, spitz nach unten zulaufende Schneide aufweisen kann.

Eine erfindungsgemäße Verlegevorrichtung kann neben der ersten Einführung und der zweiten Einführung eine oder mehrere weitere Einführungen aufweisen, über die jeweils wenigstens ein weiteres Strangmaterial in den Verlegeschlitz in einem vertikalen Abstand zu dem ersten Strangmaterial und zweiten Strangmaterial eingeführt werden kann/können und die nach dem Vorbild der zweiten Einführung so angeordnet und ausgebildet ist/sind, dass sie Erde nach unten in Richtung des über eine jeweils vorauslaufende Einführung in den Verlegeschlitz eingeführten Strangmaterials verdrängt/verdrängen.

Im Folgenden wird mit Hilfe der Zeichnungen eine bevorzugte Ausführungsform einer erfindungsgemäßen Verlegevorrichtung beschrieben, wobei die
Fig. 1 eine Seitenansicht eines Verlegesystems mit einer erfindungsgemäßen Verlegevorrichtung in einer Arbeitsstellung zeigt;
Fig. 2 eine perspektivische Draufsicht des Verlegesystems zeigt;
Fig. 3 eine perspektivische Ansicht der erfindungsgemäßen Verlegevorrichtung zeigt;
Fig. 4a eine Seitenansicht der erfindungsgemäßen Verlegevorrichtung in der Arbeitsstellung zeigt;
Fig. 4b ein in Fig. 4a mit X angegebenes Detail in größerem Maßstab zeigt;
Fig. 4c ein in Fig. 4a mit Y angegebenes Detail in größerem Maßstab zeigt;
Fig. 4d ein in Fig. 4a mit Z angegebenes Detail in größerem Maßstab zeigt;
Fig. 5 eine Draufsicht der erfindungsgemäßen Verlegevorrichtung zeigt;
Fig. 6 eine Längsschnittansicht entlang der Linie A-A in Fig. 5 zeigt;
Fig. 7a eine Rückansicht der erfindungsgemäßen Verlegevorrichtung in der Arbeitsstellung zeigt;
Fig. 7b ein in Fig. 7a mit X angegebenes Detail in größerem Maßstab zeigt; und
Fig. 7c ein in Fig. 7a mit Y angegebenes Detail in größerem Maßstab zeigt.

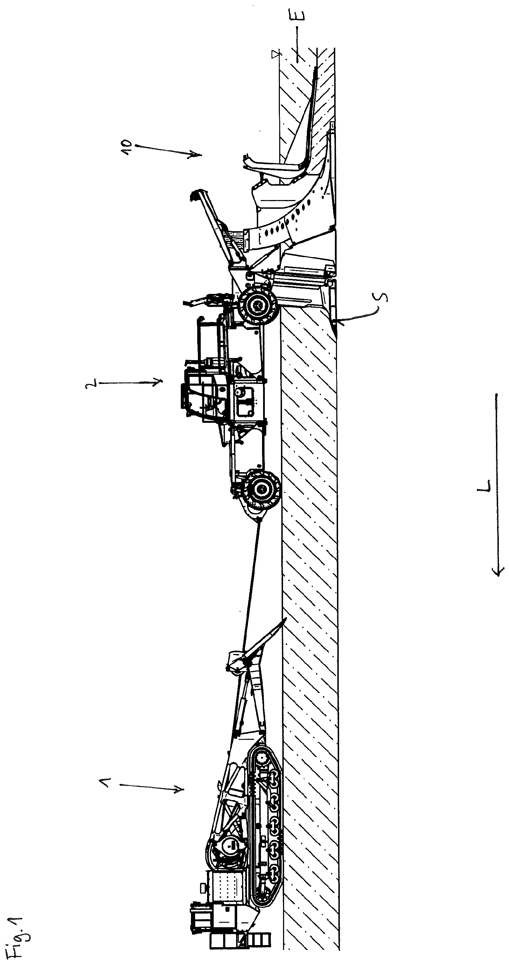

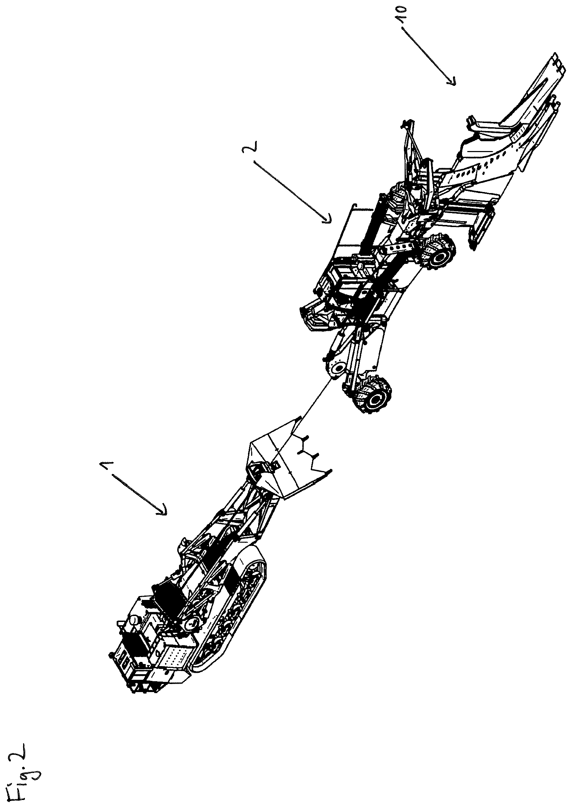

Die Fig. 1 und 2 zeigen eine Seitenansicht bzw. perspektivische Draufsicht eines Verlegesystems mit einem Zugfahrzeug 1, einem vom Zugfahrzeug 1 über ein Zugseil gezogenes Trägerfahrzeug 2 und einer vom Trägerfahrzeug 1 getragenen und in Schlepprichtung geschleppten Verlegevorrichtung 10.

Die Fig. 1 zeigt die Verlegevorrichtung 10 in ihrer Arbeitsstellung, in der die Verlegevorrichtung 10 in das Erdreich E versenkt ist.

In der Beschreibung und/oder in den Figuren verwendete Richtungsangaben, wie "Höhen- oder Vertikalrichtung" oder "vertikal", "horizontal", "auf- und abwärts", "seitlich" oder dergleichen beziehen sich auf einen Zustand, in dem sich die Verlegevorrichtung 10 in ihrer Arbeitsstellung befindet. In der Arbeitsstellung deckt sich die "Vertikalrichtung" V oder die "Höhenrichtung" der Verlegevorrichtung 10 mit der Vertikalen auf die Erdoberfläche bzw. mit der Lotrichtung. Die "Längsrichtung" L der Verlegevorrichtung 10 stimmt mit der Schlepprichtung überein.

### Verlegevorrichtung 10

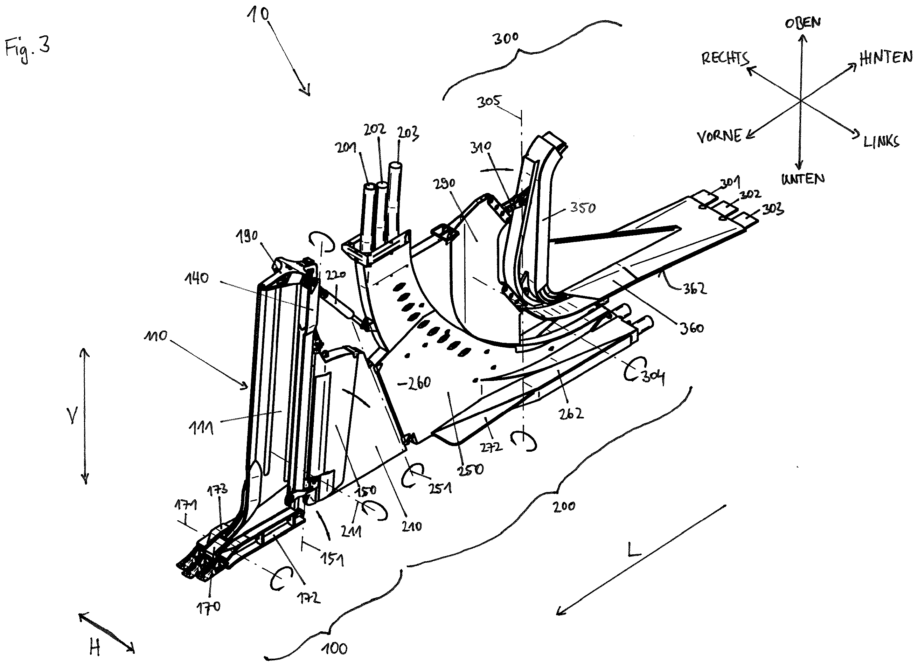

Die Fig. 3 bis Fig. 7c zeigen die bevorzugte Ausführungsform der erfindungsgemäßen Verlegevorrichtung 10. In der gezeigten Ausführungsform weist die Verlegevorrichtung 10 - von vorne nach hinten gesehen - eine sich in Vertikalrichtung V der Verlegevorrichtung 10 erstreckende Verlegeschlitzausbildungseinrichtung 100 zum Ausbilden eines Verlegeschlitzes im Erdreich E, eine in Schlepp- oder Längsrichtung L der Verlegevorrichtung 10 der Verlegeschlitzausbildungseinrichtung 100 nachlaufende, geschleppte erste Einführung 200 zum Einführen dreier flexibler erster Strangmaterialien 201, 202, 203, z.B. 150 kV-Hochspannungskabel, in den Verlegeschlitz, und eine der ersten Einführung 200 nachlaufende, geschleppte zweite Einführung 300 zum Einführen dreier flexibler zweiter Strangmaterialien 301, 302, 303, z.B. Abdeckplatten, in den Verlegeschlitz in einem vertikalen Mindestabstand MA oberhalb der ersten Strangmaterialien 201, 202, 203 auf.

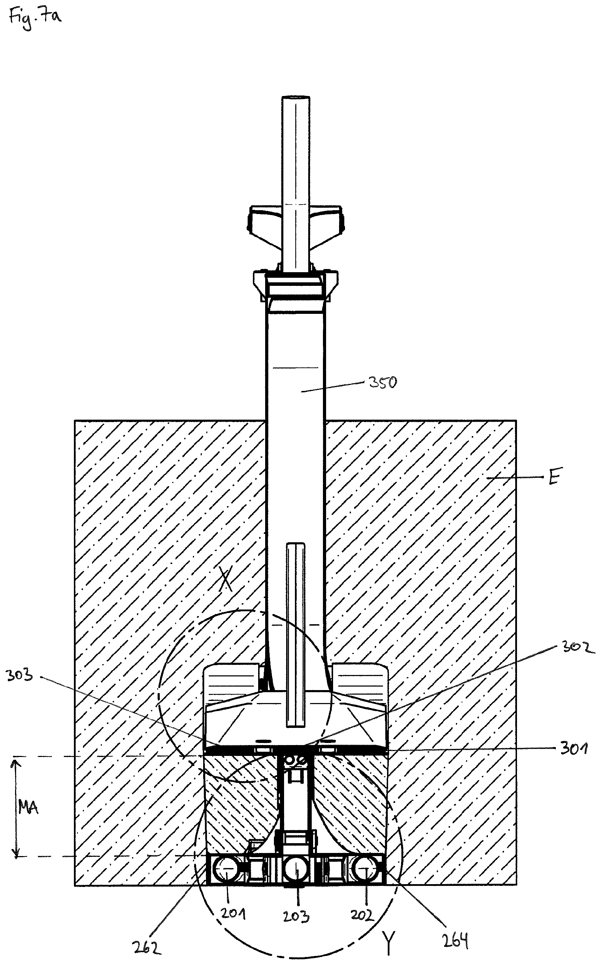

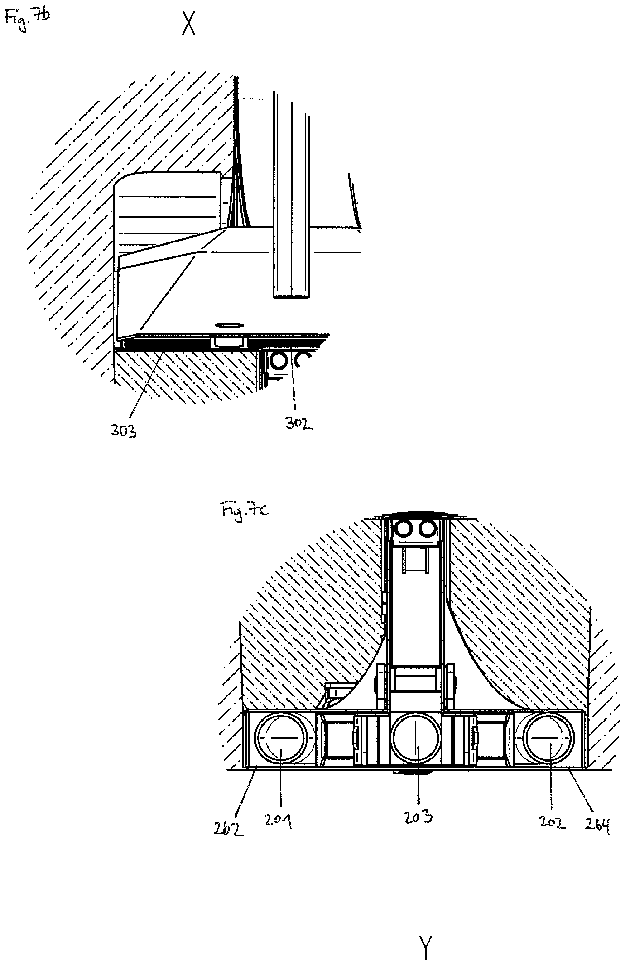

Wie die Fig. 7a zeigt, werden in der gezeigten Ausführungsform die Strangmaterialien 201 bis 203 und 301 bis 303 im Besonderen so verlegt, dass vertikal oberhalb jedes ersten Strangmaterials 201 bis 203 ein zweites Strangmaterial 301 bis 303 verlegt wird. Dabei werden die ersten Strangmaterialien 201 bis 203 auf der Sohle S des durch die Verlegeschlitzausbildungseinrichtung 100 ausgebildeten Verlegeschlitzes horizontal nebeneinander abgelegt, während die zweiten Strangmaterialien 301 bis 303 in einem vorgegebenen Mindestabstand MA vertikal oberhalb der ersten Strangmaterialien 201 bis 203 horizontal nebeneinander verlegt werden.

### Verlegeschlitzausbildungseinrichtung 100

Die Verlegeschlitzausbildungseinrichtung 100 hat, wie es in Fig. 3, Fig. 4a und Fig. 6 gezeigt ist, ein in Schlepprichtung L vorauslaufendes Schwert 110 und ein an der Rückseite des Schwertes 110 angehängtes Verdrängersegment 150.

Das Schwert 110 ist nach dem Vorbild des in der DE 101 15 456 B4 angegebenen Schwerts aus einem Schwertkörper oder Rumpf 111, einer am Kopf des Rumpfs 111 befestigten Halterung 190, über die die Verlegevorrichtung 10 an dem in Fig. 1 und Fig. 2 gezeigten Trägerfahrzeug 2 gehalten wird, einem am Fuß des Rumpfs 111 um eine horizontale Achse 171 auf- und abwärts schwenkbar angelenkten Schwertschuh 170 und einer an der Rückseite des Rumpfs 111 gehaltenen Hohlprofilführung 140, in der ein (nicht detailliert gezeigter) Stellantrieb zur Schwenkbetätigung des Schwertschuhs 170 angeordnet ist, gebildet.

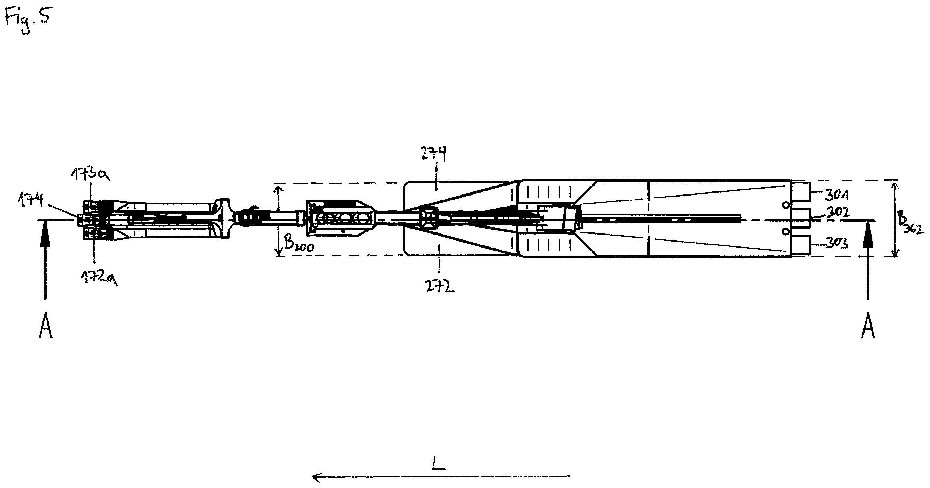

Über den auf- und abwärts schwenkbaren Schwertschuh 170 kann die Eindringtiefe der Verlegevorrichtung 10 in das Erdreich E beeinflusst oder korrigiert werden. Der Schwertschuh 170 weist, wie es in Fig. 3 gezeigt ist, beidseitig den Rumpf 111 umgreifende Flossen 172, 173 auf. In der Draufsicht in Fig. 5 gesehen, weist der Schwertschuh 170 in Schlepprichtung L sich verjüngend angeordnete Schneiden 172a, 173a, 174 auf, die, in einer Seitenansicht gesehen, jeweils spitz nach unten zulaufen. Durch den Schwertschuh 170 erhält der durch das Schwert 110 erzeugte, sich in das Erdreich E erstreckende Verlegeschlitz bereits einen umgekehrt T-förmigen Querschnitt.

Das Verdrängersegment 150 ist nach dem Vorbild der in der DE 101 15 456 B4 angegebenen Verdrängervorrichtung als ein Schweißkörper ausgeführt und an der Rückseite der Hohlprofilführung 140 des Schwerts 110 um eine in etwa vertikale Schwenkachse 151 seitlich schwenkbar angelenkt. Das Verdrängersegment 150 hat die Funktion, den durch das Schwert 110 erzeugten Verlegeschlitz im Bereich oberhalb des Schwertschuhs 170 seitlich zu verbreitern und einen Zwischenraum zwischen dem Schwert 110 und der ersten Einführung 200 zu überbrücken.

### Erste Einführung 200

Die erste Einführung 200 ist in der gezeigten Ausführungsform aus einem in Schlepprichtung L vorauslaufenden Einführungsadapter 210 und einem nachlaufenden Hohlgehäuse 250 gebildet.

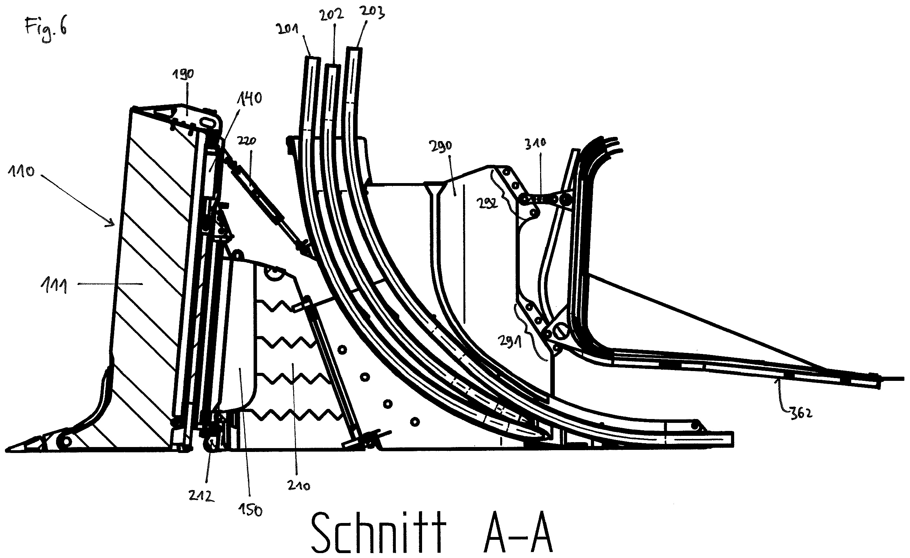

Der Einführungsadapter 210 ist als ein Hohlgehäuse, z.B. als Schweißkonstruktion, ausgebildet und wird von dem vorauslaufenden Verdrängersegment 150 schürzenartig umgriffen. Durch das schürzenartige Umgreifen des Verdrängersegments kann vermieden werden, dass Erde, insbesondere Sand oder Kies, zwischen das Verdrängersegment 150 und den Einführungsadapter 210 fällt und sich festsetzt, wodurch die Bewegbarkeit der einzelnen Teile eingeschränkt bzw. verhindert wird. Der Einführungsadapter 210 ist an einem in Schlepprichtung L ragenden Bugabschnitt 212 (vgl. Fig. 6) an dem Verdrängersegment 150 um eine horizontale Schwenkachse 211 auf- und abwärts schwenkbar angelenkt. Der Schwenkbereich des Einführungsadapters 210 kann durch einen in Fig. 3 gezeigten Stellzylinder 220, der zwischen dem Schwert 110, im Besonderen der an der Rückseite des Schwerts 110 angeordneten Hohlprofilführung 140, und dem später beschriebenen Hohlgehäuse 250 der ersten Einführung angeordnet ist, geregelt oder begrenzt werden und zwar im Besonderen so, dass ein vorderer Abschnitt des Einführungsadapters 210 in jeder Schwenklage von dem Verdrängersegment 150 schürzenartig umgriffen wird. In der Arbeitsstellung der Verlegevorrichtung 10 kann der Stellzylinder 220 funktionslos geschaltet sein, um eine ungehinderte Schwenkbeweglichkeit der ersten Einführung 200 gegenüber dem Schwert 110 zu gewährleisten. In der Arbeitsstellung wird durch die auf die einzelnen Komponenten der Verlegevorrichtung 10 wirkenden Vertikalkräfte die Schwenkbeweglichkeit der ersten Einführung 200 gegenüber dem Schwert 110 begrenzt, so dass die Funktion des Stellzylinders 220 in der Arbeitsstellung nicht benötigt wird.

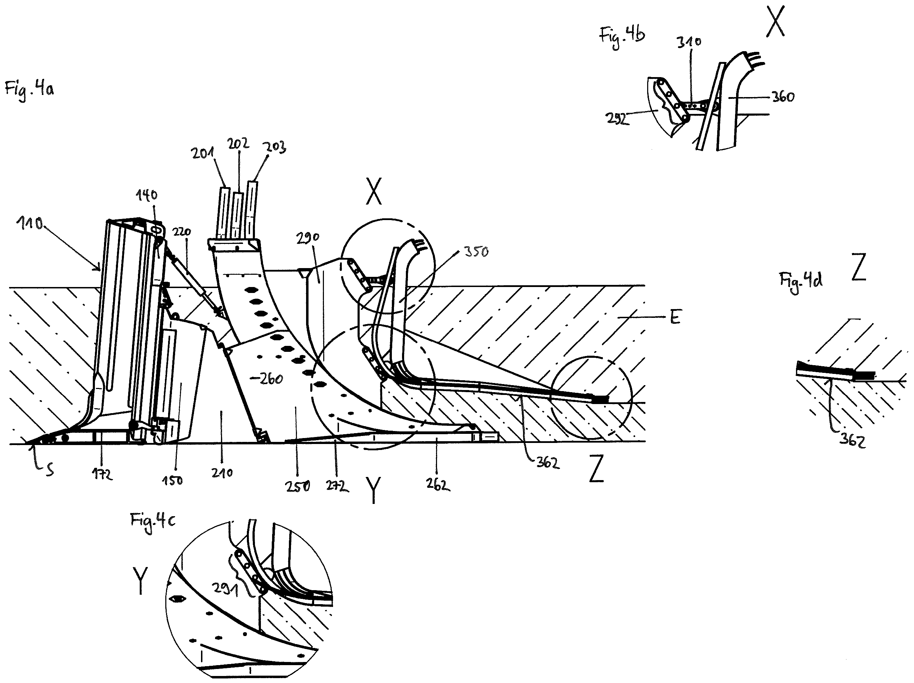

Der Einführungsadapter 210 ist, wie es in Fig. 4a und Fig. 6 gezeigt ist, relativ zum Schwert 110 so angeordnet, dass seine Unterseite oder Fußsohle im Wesentlichen auf gleicher Höhe wie eine Unterseite oder Fußsohle des Schwerts 110 läuft. Dadurch wird eine Glättung eines vom Einführungsadapter 210 überstrichenen Teils der Sohle S des durch das Schwert 110 erzeugten Verlegeschlitzes erreicht.

Das Hohlgehäuse 250 der ersten Einführung ist in der gezeigten Ausführungsform wie der Einführungsadapter als eine Schweißkonstruktion ausgebildet. Das Hohlgehäuse 250 ist an dem Einführungsadapter 210 um eine gegenüber der Vertikalen leicht schrägliegende Schwenkachse 251 seitlich schwenkbar angelenkt. Diese Schwenkachse 251 trägt dazu bei, die Schwenkbeweglichkeit der ersten Einführung 200 zu erhöhen.

Wie man in Fig. 3 und Fig. 7a erkennen kann, ist der seitliche Umriss des Hohlgehäuses 250 der ersten Einführung 200, in Schlepprichtung L gesehen, umgekehrt T-förmig. Das Hohlgehäuse 250 lässt sich im Besonderen in einen sich in Vertikalrichtung V der Verlegevorrichtung 10 erstreckenden Rumpf 260 und am Fußende beidseits des Rumpfs 260 seitlich auskragende Flossen 262, 264 unterteilen. Der Rumpf 260 hat eine Breite, die im Wesentlichen der Breite des vorauslaufenden Einführungsadapters 210 entspricht, so dass er innerhalb der durch das Verdrängersegment 150 bestimmten Breite des Verlegeschlitzes läuft.

In der gezeigten Ausführungsform (vgl. Fig. 3) sind drei, jeweils zwischen einer Eintrittsöffnung vorne oben am Hohlgehäuse 250 und einer Austrittsöffnung hinten unten am Hohlgehäuse 250 bogenförmig verlaufende Führungsschächte (vgl. Fig. 6) ausgebildet. Die Führungsschächte verlaufen voneinander getrennt zwischen den Eintriffsöffnungen und Austrittsöffnungen. Die Bogenform des Führungsschachts ist dabei so gewählt, dass ein minimal zulässiger Biegeradius der ersten Strangmaterialien 201 bis 203 nicht unterschritten wird.

Wie es in Fig. 3, Fig. 6 und Fig. 7a gezeigt ist, sind die Eintrittsöffnungen der drei Führungsschächte in Schlepprichtung L hintereinander und die Austrittsöffnungen der drei Führungsschächte horizontal oder seitlich nebeneinander angeordnet. Dadurch können die drei ersten Strangmaterialien 201 bis 203 in Schlepprichtung L der Verlegevorrichtung 10 hintereinander in den Rumpf 260 des Hohlgehäuses 250 der ersten Einführung 200 eintreten und horizontal beabstandet am Rumpf 260 bzw. an den beiden Flossen 262, 264 des Hohlgehäuses 250 der ersten Einführung 200 austreten und auf der durch die umgekehrte T-Form des Hohlgehäuses 250 der ersten Einführung 200 horizontal verbreiterten Sohle S des Verlegeschlitzes abgelegt werden.

Das Hohlgehäuse 250 der ersten Einführung 200 weist des Weiteren beidseitig und in Schlepprichtung L vor den Flossen 262, 264 angeordnete Schaufelelemente 272, 274 (vgl. Fig. 5) mit einer schräg nach vorne unten geneigten Schaufelfläche (vgl. Fig. 3, Fig. 4a) auf. Die in Schlepprichtung L vorderen Enden der Schaufelelemente 272, 274 liegen im Wesentlichen auf gleicher Höhe wie die Fußsohle des Schwertes 110, die Fußsohle des Einführungsadapters 210 bzw. die Fußsohle des Rumpfs 260 des Hohlgehäuses 250. Die Schaufelelemente 272, 274 erleichtern die horizontale Verbreiterung des Verlegeschlitzes. Des Weiteren trägt die schräg nach vorne unten geneigte Form der Schaufelflächen dazu bei, dass die Schaufelelemente 272, 274 Erde nach oben verdrängen und dadurch das Hohlgehäuse 250 der ersten Einführung 200 eine Kraft in Vertikalrichtung von oben nach unten erfährt. Einerseits wird dadurch erreicht, dass die erste Einführung 200 gegen die Verlegeschlitzsohle S gedrückt wird und nicht durch Steine oder dergleichen im Erdreich nach oben wandert. Andererseits kann dadurch erreicht werden, dass die aus den Austrittsöffnungen des Hohlgehäuses 250 der ersten Einführung 200 austretenden ersten Strangmaterialien 201 bis 203 sicher auf der geglätteten Verlegeschlitzsohle S abgelegt werden.

In der gezeigten Ausführungsform wird die erste Einführung 200 also mittelbar über das Verdrängersegment 150 von dem Schwert 110 geschleppt.

An der Rückseite des Rumpfs 260 des Hohlgehäuses 250 der ersten Einführung 200 ist, wie es in Fig. 3, Fig. 4a und Fig. 6 gezeigt ist, ein Einführungsaufsatz 290 starr befestigt. An einem hinteren unteren Abschnitt des Einführungsaufsatzes 290 sind in einer schräg nach vorne oben verlaufenden Anordnung mehrere Befestigungsaugen 291 ausgebildet. An einem hinteren oberen Abschnitt des Einführungsaufsatzes 290 sind in einer ebenfalls schräg nach vorne oben verlaufenden Anordnung mehrere Befestigungsaugen 292 ausgebildet. Die Befestigungsaugen 291 und 292 dienen zur verstellbaren Befestigung eines später beschriebenen Hohlgehäuses 350 der zweiten Einführung 300.

### Hohlgehäusekonstruktionseinheit (zweite Einführung 300 und Verdränger 360)

Wie bereits angegeben, dient die der ersten Einführung 200 nachlaufende, geschleppte zweite Einführung 300 dazu, in der gezeigten Ausführungsform drei zweite Strangmaterialien 301, 302, 303, z.B. Abdeckplatten, in einem vertikalen Mindestabstand MA oberhalb der ersten Strangmaterialien 201, 202, 203 zu verlegen. Wie die Fig. 7a zeigt, werden die Strangmaterialien 201 bis 203 und 301 bis 303 im Besonderen so verlegt, dass in einem vorgegebenen Mindestabstand MA vertikal oberhalb jedes ersten Strangmaterials 201 bis 203 ein zweites Strangmaterial 301 bis 303 verlegt wird.

Um den vorgegebenen vertikalen Mindestabstand MA zu gewährleisten, ist der zweiten Einführung 300 in Schlepprichtung vorauslaufend ein Verdränger 360 vorgesehen, der Erde aus dem an den Verlegeschlitz seitlich angrenzenden Erdreich E heraus auf die ersten Strangmaterialien 201 bis 203 verdrängt und verdichtet, um anschließend auf der verdichteten Erde die über die zweite Einführung 300 eingeführten Strangmaterialien 301 bis 303 ablegen zu können.

In der gezeigten Ausführungsform sind der Verdränger 360 und die zweite Einführung 300 zu einer einstückig handhabbaren, von der ersten Einführung 200 geschleppten Hohlgehäusekonstruktionseinheit zusammengefasst:
Die zweite Einführung 300 weist ein sich im Wesentlichen vertikal erstreckendes Schachtgehäuse 350 auf, das aus einer Hohlplatte gebildeten Verdränger 360 sitzt, wie es in Fig. 3, Fig. 4a, Fig. 6 und Fig. 7a gezeigt ist. Durch das Schachtgehäuse 350 und den Verdränger 360 erstreckt sich ein bogenförmig verlaufender Führungsschacht, der sich zwischen einer Eintrittsöffnung oben an der Hohlgehäusekonstruktionseinheit und drei, horizontal beabstandeten Austrittsöffnungen hinten unten an der Hohlgehäusekonstruktionseinheit erstreckt. Die Unterseite der Hohlgehäusekonstruktionseinheit, im Besonderen des Verdrängers 360 bildet eine Verdrängerfläche 362 (vgl. Fig. 3, Fig. 4a, Fig. 6).
Die Verdrängerfläche 362 hat die Funktion, Erde, die aus dem an den Verlegeschlitz seitlich angrenzenden Erdreich E, in Schlepprichtung L betrachtet, vor der zweiten Einführung 300 unter die Verdrängerfläche 362 gerät, in den Bereich zwischen den ersten Strangmaterialien 201 bis 203 und den zweiten Strangmaterialien 301 bis 303 zu verdrängen und zu verdichten, um durch die nach unten verdrängte Erde den vorgegebenen vertikalen Mindestabstand MA zu erhalten. In einer Seitenansicht gesehen (vgl. Fig. 4a) ist die Verdrängerfläche 362 im Wesentlichen - wie ein Ski - am vorderen Ende kufenförmig nach oben gebogen und fällt hinter der Kufe schräg nach hinten unten ab.

Wie man in Fig. 4a, Fig. 5 und Fig. 6 erkennt, ist die Verdrängerfläche 362 oberhalb der Austrittsöffnungen der ersten Einführung 200 angeordnet, aus denen die ersten Strangmaterialien 201 bis 203 austreten, und von einer Stelle, die in einer Seitenansicht (vgl. Fig. 4a) in etwa vertikal über den Austrittsöffnungen liegt, weg schräg nach hinten unten geneigt. In Schlepprichtung L nach vorne projiziert (vgl. 7a und Fig. 5) ragt die Verdrängerfläche 362 beidseitig horizontal seitlich über die Verlegeschlitzausbildungseinrichtung 100, im Besonderen über das Verdrängersegment 150 hinaus, das die Breite des vertikalen Abschnitts des Verlegeschlitzes bestimmt, in dem der Rumpf 260 des Hohlgehäuses 250 der ersten Einführung 200 läuft. Die Verdrängerfläche 362 schneidet daher notwendig in das seitlich an den Verlegeschlitz angrenzende bzw. das seitlich am Rumpf 260 des Hohlgehäuses 250 der ersten Einführung 200 vorbeistreichende Erdreich E.

Die Neigung der Verdrängerfläche 362 nach hinten unten, d.h. in Richtung der Sohle S des Verlegeschlitzes, auf der die ersten Strangmaterialien 201 bis 203 abgelegt werden, sorgt dafür, dass die nach unten verdrängte Erde zusammengepresst und verdichtet wird, so dass der vorgegebene vertikale Mindestabstand MA nicht durch ein andernfalls möglicherweise auftretendes Setzen und Absinken der den Verlegeschlitz zwischen den ersten und zweiten Strangmaterialien füllenden Erde gefährdet wird.

In der gezeigten Ausführungsform hat die Verdrängerfläche 362 eine maximale Breite B₃₆₂ (vgl. Fig. 5), die im Wesentlichen der maximalen Breite B₂₀₀ der ersten Einführung 200 entspricht. Die Breite B₃₆₂ der Verdrängerfläche 362 kann aber auch kleiner oder größer sein als die maximale Breite der ersten Einführung 200, sofern sie - wie oben angegeben - in Schlepprichtung L projiziert (vgl. 7a und Fig. 5) über das Verdrängersegment 150 bzw. den Rumpf 260 des Hohlgehäuses 250 der ersten Einführung 200 hinaus ragt. Dadurch lässt sich sicherstellen, dass auch die beiden 201, 202 horizontal außenliegenden der drei Strangmaterialien 201 bis 203 von verdrängter Erde überdeckt sind.

Die Fig. 4a zeigt des Weiteren, dass die Austrittsöffnungen, aus denen die zweiten Strangmaterialien 301 bis 303 austreten, in Schlepprichtung L hinter den Austrittsöffnungen der ersten Einführung liegen.

Die Fig. 3 zeigt, dass die aus der zweiten Einführung 300 und dem Verdränger 360 gebildete Hohlgehäusekonstruktionseinheit relativ zur ersten Einführung 200 um eine im Wesentlichen horizontale Schwenkachse 304 auf- und abwärts schwenkverstellbar, insbesondere stufenlos schwenkverstellbar ist. Hierzu ist in der gezeigten Ausführungsform zwischen dem an der Rückseite des Rumpfs 260 des Hohlgehäuses 250 der ersten Einführung 200 befestigten Einführungsaufsatz 290 und dem Schachtgehäuse 350 der zweiten Einführung 300 ein Stellmechanismus 310, der die Schwenklage festgelegt, angeordnet. Der Stellmechanismus 310, z.B. eine Gliederkette, Spindel, ein Gestänge, ein stufenlos einstellbares Zwischenglied oder dergleichen, ist an seinem hinteren Ende mit einem geringfügigen Spiel an einem oberen Abschnitt der Vorderseite des Hohlgehäuses 350 gelenkig befestigt. An seinem vorderen Ende ist der Stellmechanismus 310 an einem der Befestigungsaugen 292 gelenkig befestigt. Das Schachtgehäuse 350 ist am unteren Ende seiner Vorderseite an einem der Befestigungsaugen 291 des Einführungsaufsatzes 290 angelenkt. Durch die Schwenkverstellung der zweiten Einführung 300 lässt sich deren Schwenklage relativ zur ersten Einführung 200 bestimmen. Dadurch lässt sich einerseits der vertikale Abstand der Austrittsöffnungen der zweiten Einführung 300 relativ zu den Austrittsöffnungen der ersten Einführung 200 einstellen. Andererseits lässt sich durch die Schwenkverstellung der zweiten Einführung 300 die Schräglage der Verdrängerfläche 362 einstellen oder korrigieren, um eine ausreichende Verdrängung von Erde zu erhalten.

Statt der Schwenkverstellung durch den oben erwähnten Stellmechanismus 310 kann der vorgegebene Mindestabstand MA auch durch eine entsprechende Anpassung der Breite (Verbreiterung oder Verkleinerung) der Projektionsfläche der zweiten Einführung 300 in Schlepprichtung L in einem Bereich oberhalb der horizontalen Schwenkachse 304 der zweiten Einführung 300 erreicht werden. Durch eine geschickte Breitenanpassung der zweiten Einführung 300 kann der beim Schleppen auf die zweite Einführung 300 wirkende Schleppwiderstand so beeinflusst werden, dass die Austrittsöffnung der zweiten Einführung 300 durch ein Gleichgewicht des sich durch den Widerstand ergebenden Drehmoments und des sich durch die Erdverdrängung der Verdrängerfläche 362 ergebenden Drehmoments im Wesentlichen auf dem vorgegebenen Mindestabstand MA zur Austrittsöffnung der ersten Einführung 200 gehalten wird.

Des Weiteren ist die die zweite Einführung 300 und den Verdränger 360 aufweisende Hohlgehäusekonstruktionseinheit relativ zur ersten Einführung 200 um eine im Wesentlichen vertikale Schwenkachse 305 seitlich schwenkbar. Die dadurch erhaltene Schwenkbarkeit ist von Vorteil, um bei einer Kurvenfahrt der Verlegevorrichtung 10 ein allzu starkes seitliches Ausscheren des hinteren Endes der zweiten Einführung 300, in dem die Austrittsöffnungen liegen, relativ zu den Austrittsöffnungen der ersten Einführung 200 zu vermeiden.

In der oben gezeigten Ausführungsform ist der Verdränger 360 mit der zweiten Einführung 300 zu einer einstückig handhabbaren Hohlgehäusekonstruktionseinheit verbunden. Die zweite Einführung 300 "sitzt" auf dem plattenförmigen Verdränger 360. Die Einheit aus Verdränger 360 und zweiter Einführung 300 erfüllt zwei Funktionen: erstens, die Verlegung der zweiten Strangmaterialien 301 bis 303 in den Verlegeschlitz; und zweitens die Verdrängung und Verdichtung von Erde nach unten auf die bereits verlegten ersten Strangmaterialien 201 bis 203. In einer nicht gezeigten Ausführungsform können der Verdränger und die zweite Einführung als unabhängige Elemente oder Komponenten ausgebildet sein, d.h. nicht zu einer einstückig handhabbaren Hohlgehäusekonstruktionseinheit verbunden sein. In diesem Fall kann beispielsweise der Verdränger von der ersten Einführung und die zweite Einführung vom Verdränger geschleppt werden.

Des Weiteren weist in der oben beschriebenen Ausführungsform die Verlegevorrichtung 10 mit der ersten Einführung 200 und der zweiten Einführung 300 zwei Einführungen auf, die in Schlepprichtung hintereinander angeordnet sind, wobei die zweite Einführung 300 von der ersten Einführung 200 geschleppt wird. Davon abweichend kann die Verlegevorrichtung eine oder mehrere weitere, geschleppte Einführungen aufweisen, die analog der Anordnung der ersten Einführung 200 und zweiten Einführung 300 in Schlepprichtung L hintereinander angeordnet sind und mittelbar oder unmittelbar von einer jeweils vorauslaufenden Einführung geschleppt wird/werden. Über die eine oder mehreren weiteren Einführungen kann jeweils wenigstens ein weiteres Strangmaterial in einem vertikalen Abstand zu einem über eine jeweils vorauslaufende Einführung in den Verlegeschlitz eingeführten Strangmaterial in den Verlegeschlitz eingeführt werden. Jede weitere Einführung kann nach dem Vorbild der zweiten Einführung 300 so angeordnet und ausgebildet sein, dass sie Erde nach unten in Richtung des über eine jeweils vorauslaufende Einführung eingeführten Strangmaterials verdrängt und verdichtet.

## Patentansprüche

1. Verlegevorrichtung (10) zur Erdverlegung flexibler Strangmaterialien, mit:
einer sich in einer Vertikalrichtung (V) der Verlegevorrichtung (10) erstreckenden Verlegeschlitzausbildungseinrichtung (100) zum Ausbilden eines Verlegeschlitzes im Erdreich (E),
einer in Längsrichtung (L) der Verlegevorrichtung (10) der Verlegeschlitzausbildungseinrichtung (100) nachlaufenden, geschleppten ersten Einführung (200) zum Einführen zumindest eines flexiblen ersten Strangmaterials in den Verlegeschlitz,
einer der ersten Einführung (200) nachlaufenden, geschleppten zweiten Einführung (300) zum Einführen zumindest eines flexiblen zweiten Strangmaterials in den Verlegeschlitz in einem vertikalen Mindestabstand (MA) oberhalb des ersten Strangmaterials, und
einem zwischen der ersten Einführung (200) und zweiten Einführung (300) angeordneten Verdränger (360) mit einer Verdrängerfläche (362) zum Verdrängen von Erde aus dem an den Verlegeschlitz seitlich angrenzenden Erdreich (E) auf das zumindest eine erste Strangmaterial,
**dadurch gekennzeichnet, dass**
der Verdränger (360) mit der zweiten Einführung (300) relativ zur ersten Einführung (200) auf- und abwärts schwenkverstellbar ist.

2. Verlegevorrichtung (10) nach Anspruch 1, **dadurch gekennzeichnet, dass** die Verdrängerfläche (362):
oberhalb einer Austrittsöffnung der ersten Einführung (200) angeordnet ist, aus der ein erstes Strangmaterial austritt,
in Schlepprichtung (L) hinter der Austrittsöffnung der ersten Einführung (200) zumindest abschnittsweise nach hinten unten geneigt ist, und
in Schlepprichtung (L) projiziert horizontal über die Verlegeschlitzausbildungseinrichtung (100) hinausragt.

3. Verlegevorrichtung (10) nach Anspruch 2, **dadurch gekennzeichnet, dass** eine maximal Breite der Verdrängerfläche (362) im Wesentlichen einer maximalen Breite der ersten Einführung (200) entspricht oder größer ist.

4. Verlegevorrichtung (10) nach einem der Ansprüche 1 bis 3, **dadurch gekennzeichnet, dass** eine Austrittsöffnung der zweiten Einführung (300), aus der das zweite Strangmaterial austritt, in Schlepprichtung (L) hinter der Austrittsöffnung der ersten Einführung (200) liegt.

5. Verlegevorrichtung (10) nach einem der Ansprüche 1 bis 4, **dadurch gekennzeichnet, dass** die Verdrängerfläche (362) an ihrem in Schlepprichtung (L) vorderen Abschnitt nach vorne oben geneigt ist.

6. Verlegevorrichtung (10) nach einem der Ansprüche 1 bis 5, **dadurch gekennzeichnet, dass** die Verdrängerfläche (362), in Schlepprichtung (L) gesehen, auf Höhe der Austrittsöffnung der ersten Einführung (200) nach hinten unten geneigt ist.

7. Verlegevorrichtung (10) nach einem der Ansprüche 1 bis 6, **dadurch gekennzeichnet, dass** der Verdränger (360) mit der zweiten Einführung (300) relativ zur ersten Einführung (200) seitlich schwenkbar ist.

8. Verlegevorrichtung (10) nach einem der Ansprüche 1 bis 7, **dadurch gekennzeichnet, dass** der Verdränger (360) mit der zweiten Einführung (300) eine Hohlgehäusekonstruktionseinheit bildet, die zumindest einen zwischen einer Eintrittsöffnung und der Austrittsöffnung bogenförmig verlaufenden Führungsschacht zur Führung eines zweiten Strangmaterials aufweist.

9. Verlegevorrichtung (10) nach Anspruch 8, **dadurch gekennzeichnet, dass** die Hohlgehäusekonstruktionseinheit einen Führungsschacht mit einer Eintrittsöffnung und mehreren, voneinander getrennten Austrittsöffnungen aufweist, die seitlich nebeneinander angeordnet sind.

10. Verlegevorrichtung (10) nach einem der Ansprüche 1 bis 9, **dadurch gekennzeichnet, dass** die erste Einführung (200) ein Hohlgehäuse (250) aufweist, das zumindest einen zwischen einer Eintrittsöffnung und der Austrittsöffnung bogenförmig verlaufenden Führungsschacht zur Führung eines ersten Strangmaterials bildet.

11. Verlegevorrichtung (10) nach Anspruch 10, **dadurch gekennzeichnet, dass** der seitliche Umriss des Hohlgehäuses (250) der ersten Einführung (200), in Schlepprichtung (L) gesehen, umgekehrt T-förmig ist.

12. Verlegevorrichtung (10) nach Anspruch 11, **dadurch gekennzeichnet, dass** das Hohlgehäuse (250) einen sich in Vertikalrichtung (V) der Verlegevorrichtung (10) erstreckenden Rumpf (260) und am Fußende beidseits des Rumpfs (260) seitlich auskragende Flossen (262, 264) aufweist.

13. Verlegevorrichtung (10) nach Anspruch 11 oder 12, **dadurch gekennzeichnet, dass** die erste Einführung (200) mehrere Führungsschächte aufweist, die voneinander getrennt so verlaufen, dass die Eintrittsöffnungen in Schlepprichtung (L) hintereinander und die Austrittsöffnungen seitlich nebeneinander angeordnet sind.

14. Verlegevorrichtung (10) nach einem der Ansprüche 10 bis 13, **dadurch gekennzeichnet, dass** das Hohlgehäuse (250) der ersten Einführung (200) beidseitig des Hohlgehäuses (250) ein Schaufelelement (272, 274) mit einer schräg nach vorne unten geneigten Schaufelfläche aufweist.

15. Verlegevorrichtung (10) nach Anspruch 14, **dadurch gekennzeichnet, dass** die in Schlepprichtung (L) vorderen Enden der Schaufelelemente (272, 274) im Wesentlichen auf gleicher Höhe mit einer Fußsohle der Verlegeschlitzausbildungseinrichtung (100) liegen.

## Claims

1. Relocation device (10) for laying flexible strand material in the ground, with:
a laying slot formation device (100), extending in a vertical direction (V) of the relocation device (10), for forming a laying slot in the ground (E),
a towed first introducing device (200), trailing in longitudinal direction (L) of the relocation device (10) of the laying slot formation device (100), for introducing at least one first flexible strand material in the laying slot,
a towed second introducing device (300), trailing after the first introducing device (200,) for introducing at least one second flexible strand material in the laying slot at a vertical minimum distance (MA) above the first strand material, and
a displacing device (360) arranged between the first introducing device (200) and second introducing device (300), having a displacing surface (362) for displacing soil from the ground (E) adjoining laterally on the laying slot onto the at least one first strand material,
**characterised in that**
the displacing device (360) with the second introducing device (300) is pivotably displaceable upwards and downwards relative to the first introducing device (200).

2. Relocation device (10) according to claim 1, **characterised in that** the displacing surface (362):
is arranged above an emerging opening of the first introducing device (200), from which a first strand material emerges,
in towing direction (L) behind the emerging opening of the first introducing device (200) is tilted at least partly downwards to the rear, and
in towing direction (L) projected protrudes horizontally above the laying slot formation device (100).

3. Relocation device (10) according to claim 2, **characterised in that** a maximum width of the displacing surface (362) is substantially equal to or greater than a maximum width of the first introducing device (200).

4. Relocation device (10) according to any of claims 1 to 3, **characterised in that** an emerging opening of the second introducing device (300), from which the second strand material emerges, lies in towing direction (L) behind the emerging opening of the first introducing device (200).

5. Relocation device (10) according to any of claims 1 to 4, **characterised in that** the displacing surface (362) is tilted forwards upwards at its front portion in towing direction (L).

6. Relocation device (10) according to any of claims 1 to 5, **characterised in that** the displacing surface (362), viewed in towing direction (L), is tilted rearwards downwards at the level of the emerging opening of the first introducing device (200).

7. Relocation device (10) according to any of claims 1 to 6, **characterised in that** the displacing device (360) with the second introducing device (300) is laterally pivotable relative to the first introducing device (200).

8. Relocation device (10) according to any of claims 1 to 7, **characterised in that** the displacing device (360) with the second introducing device (300) forms a hollow housing constructional unit, which has at least one guide shaft extending in a curve between an entry opening and the emerging opening for conducting a second strand material.

9. Relocation device (10) according to claim 8, **characterised in that** the hollow housing constructional unit has a guide shaft with an entry opening and several emerging openings separated from another, which are arranged laterally next to one another.

10. Relocation device (10) according to any of claims 1 to 9, **characterised in that** the first introducing device (200) has a hollow housing (250) which forms at least one guide shaft extending in a curve-like manner between an entry opening and the emerging opening, for conducting a first strand material.

11. Relocation device (10) according to claim 10, **characterised in that** the lateral shape of the hollow housing (250) of the first introducing device (200), viewed in towing direction (L), is an inverted T-shape.

12. Relocation device (10) according to claim 11, **characterised in that** the hollow housing (250) has a hull (260) extending in vertical direction (V) of the relocation device (10) and fins (262, 264) projecting laterally on both sides of the hull (260).

13. Relocation device (10) according to claim 11 or 12, **characterised in that** the first introducing device (200) has a plurality of guide shafts which extend separately from one another such that the entry openings are arranged in towing direction (L) one behind another and the emerging openings are arranged laterally next to one another.

14. Relocation device (10) according to any of claims 10 to 13, **characterised in that** the hollow housing (250) of the first introducing device (200) has on each side of the hollow housing (250) a shovel element (272, 274) with a shovel surface tilted obliquely downward to the front.

15. Relocation device (10) according to claim 14, **characterised in that** the front ends in towing direction (L) of the shovel elements (272, 274) lie substantially on the same level as a sole of the laying slot formation device (100).

## Revendications

1. Dispositif de pose (10) pour la pose en terre de matériaux en fils flexibles, avec :
un dispositif de réalisation de fente de pose (100) s'étendant dans une direction verticale (V) du dispositif de pose (10) pour la réalisation d'une fente de pose dans le terrain (E),
une première entrée (200) traînée, en aval du dispositif de réalisation de fente de pose (100) dans la direction longitudinale (L) du dispositif de pose (10) pour l'introduction d'au moins un premier matériau en fil flexible dans la fente de pose,
une deuxième entrée (300) traînée, en aval de la première entrée (200), pour l'introduction d'au moins un deuxième matériau en fil flexible dans la fente de pose à une distance minimale verticale (MA) au-dessus du premier matériau en fil, et
un dispositif de déplacement (360) disposé entre la première entrée (200) et deuxième entrée (300) avec une surface de déplacement (362) pour le déplacement de terre du terrain (E) adjacent latéralement à la fente de pose sur le au moins un premier matériau en fil,
**caractérisé en ce que**
le dispositif de déplacement (360) avec la deuxième entrée (300) est pivotant vers le haut et vers le bas par rapport à la première entrée (200).

2. Dispositif de pose (10) selon la revendication 1, **caractérisé en ce que** la surface de déplacement (362) :
est disposée au-dessus d'une ouverture de sortie de la première entrée (200) d'où sort un premier matériau en fil,
est inclinée vers le bas et vers l'arrière au moins sur certaines parties dans la direction d'entraînement (L) derrière l'ouverture de sortie de la première entrée (200), et
fait saillie du dispositif de réalisation de fente de pose (100) horizontalement de manière projetée dans la direction d'entraînement (L).

3. Dispositif de pose (10) selon la revendication 2, **caractérisé en ce qu'**une largeur maximale de la surface de déplacement (362) correspond sensiblement à une largeur maximale de la première entrée (200) ou est plus grande.

4. Dispositif de pose (10) selon l'une quelconque des revendications 1 à 3, **caractérisé en ce qu'**une ouverture de sortie de la deuxième entrée (300) d'où sort le deuxième matériau en fil se situe derrière l'ouverture de sortie de la première entrée (200) dans la direction d'entraînement (L).

5. Dispositif de pose (10) selon l'une quelconque des revendications 1 à 4, **caractérisé en ce que** la surface de déplacement (362) est inclinée vers le haut et vers l'avant sur sa partie avant dans la direction d'entraînement (L).

6. Dispositif de pose (10) selon l'une quelconque des revendications 1 à 5, **caractérisé en ce que** la surface de déplacement (362), vue dans la direction d'entraînement (L), est inclinée vers le bas et l'arrière à hauteur de l'ouverture de sortie de la première entrée (200).

7. Dispositif de pose (10) selon l'une quelconque des revendications 1 à 6, **caractérisé en ce que** le dispositif de déplacement (360) avec la deuxième entrée (300) peut pivoter latéralement par rapport à la première entrée (200).

8. Dispositif de pose (10) selon l'une quelconque des revendications 1 à 7, **caractérisé en ce que** le dispositif de déplacement (360) avec la deuxième entrée (300) forme une unité structurale de logement creux, qui présente au moins un puits de guidage s'étendant de manière arquée entre une ouverture d'entrée et l'ouverture de sortie pour le guidage d'un deuxième matériau en fil.

9. Dispositif de pose (10) selon la revendication 8, **caractérisé en ce que** l'unité structurale de logement creux présente un puits de guidage avec une ouverture d'entrée et plusieurs ouvertures de sortie séparées les unes des autres, qui sont disposées latéralement les unes à côté des autres.

10. Dispositif de pose (10) selon l'une quelconque des revendications 1 à 9, **caractérisé en ce que** la première entrée (200) présente un logement creux (250), qui forme au moins un puits de guidage s'étendant de manière arquée entre une ouverture d'entrée et l'ouverture de sortie pour le guidage d'un premier matériau en fil.

11. Dispositif de pose (10) selon la revendication 10, **caractérisé en ce que** le contour latéral du logement creux (250) de la première entrée (200), vu dans la direction d'entraînement (L), est en forme de T inversé.

12. Dispositif de pose (10) selon la revendication 11, **caractérisé en ce que** le logement creux (250) présente une coque (260) s'étendant dans la direction verticale (V) du dispositif de pose (10) et au gros bout des ailerons (262, 264) faisant saillie latéralement de part et d'autre de la coque (260).

13. Dispositif de pose (10) selon la revendication 11 ou 12, **caractérisé en ce que** la première entrée (200) présente plusieurs puits de guidage, qui s'étendent de manière séparée les uns des autres, de sorte que les ouvertures d'entrée sont disposées les unes derrière les autres dans la direction d'entraînement (L) et les ouvertures de sortie latéralement les unes à côté des autres.

14. Dispositif de pose (10) selon l'une quelconque des revendications 10 à 13, **caractérisé en ce que** le logement creux (250) de la première entrée (200) présente de part et d'autre du logement creux (250) un élément pelle (272, 274) avec une surface de pelle inclinée vers l'avant et le bas de manière oblique.

15. Dispositif de pose (10) selon la revendication 14, **caractérisé en ce que** les extrémités avant des éléments pelles (272, 274) dans la direction d'entraînement (L) se situent sensiblement à la même hauteur avec une semelle du dispositif de réalisation de fente de pose (100).
